(19) Europäisches Patentamt
European Patent Office
Office européen des brevets

(11) Publication number: 0 435 377 B1

(12) EUROPEAN PATENT SPECIFICATION

(45) Date of publication of patent specification: 05.04.95

(51) Int. Cl.⁶: **F16H 61/06**

(21) Application number: 90203332.3

(22) Date of filing: 13.12.90

(54) **Method of controlling gear change in an automatic transmission.**

(30) Priority: 11.01.90 US 463718
26.12.89 US 456434

(43) Date of publication of application:
03.07.91 Bulletin 91/27

(45) Publication of the grant of the patent:
05.04.95 Bulletin 95/14

(84) Designated Contracting States:
DE FR GB

(56) References cited:
EP-A- 0 230 101
EP-A- 0 231 593
EP-A- 0 322 111
EP-A- 0 327 004

(73) Proprietor: **GENERAL MOTORS CORPORA-TION**
**General Motors Building**
**3044 West Grand Boulevard**
**Detroit**
**Michigan 48202 (US)**

(72) Inventor: **Runde, Jeffrey Kurt**
**7818 Stonebranch South Drive**
**Indianapolis, IN 46256 (US)**
Inventor: **Hunter, Joseph Henry**
**451 Meadowview Court**
**Carmel, IN 46032 (US)**
Inventor: **Hibner, John Anthony**
**206 E. College Street**
**Coldwater, OH 45828 (US)**

(74) Representative: **Denton, Michael John et al**
**Patent Section**
**1st Floor**
**Gideon House**
**28 Chapel Street**
**Luton**
**Bedfordshire LU1 2SE (GB)**

## Description

This invention relates to a method of controlling the change in an automatic transmission from a lower speed ratio to a higher speed ratio.

Generally, a motor vehicle automatic transmission includes a number of gear elements coupling its input and output shafts, and a related number of torque establishing devices such as clutches and brakes which are selectively engageable to activate certain gear elements for establishing a desired speed ratio between the input and output shafts. The brake can be of the band-type or disc-type. Automotive engineers commonly refer to disc-type brakes in transmissions as "clutches" or "reaction clutches". As used herein, the terms "clutches" and "torque transmitting devices" will be used to refer to brakes as well as clutches.

The input shaft is connected to the vehicle engine through a fluid coupling such as a torque converter, and the output shaft is connected directly to the vehicle wheels. Shifting from one forward speed ratio to another is performed in response to engine throttle and vehicle speed, and generally involves releasing or disengaging the clutch (off-going) associated with the current speed ratio and applying or engaging the clutch (on-coming) associated with the desired speed ratio.

The speed ratio is defined as the transmission input speed or turbine speed divided by the output speed. Thus, a low gear range has a high speed ratio and a higher gear range has a lower speed ratio. To perform a downshift, a shift is made from a low speed ratio to a high speed ratio. In the type of transmission described below, the downshift is accomplished by disengaging a clutch associated with the lower speed ratio and engaging a clutch associated with the higher speed ratio, thereby to reconfigure the gear set to operate at the higher speed ratio. Shifts performed in the above manner are termed clutch-to-clutch shifts and require precise timing in order to achieve high quality shifting.

It has now been found that the quality of shift depends on the cooperative operation of several functions, such as pressure changes and the timing of control events. Certain parameters in the shift control can be recognized as key elements in determining the shift quality. The vehicle type and the engine characteristics are very important factors in the shift operation and influence the correct selection of the parameters. Moreover, manufacturing tolerances in each transmission, changes due to wear, variations in oil quality and temperature, etc., lead to shift quality degradation which can be overcome by an adaptive scheme, described below, for adjusting the parameters whereby as the vehicle is driven the shift quality is analyzed and the required adjustments are calculated and implemented for subsequent shifts.

Large calibration adjustments may need to be made for each shift of a newly manufactured transmission. It is important to provide the capability for the transmission control to adjust itself rapidly to its system configuration when it is first operated, as well as to maintain a continuous update capability.

EP-A-0,327,004 discloses a method of controlling shifts in an automatic transmission which includes a feed-back control period in which the number of revolutions of the turbine is controlled at a given change rate by adjusting the force for coupling a transmission brake and clutch by two duty solenoid valves, by means of control of the duty cycle of the valves. After each shift a learning value is determined for optimising a control value to be used during the control period. Such learning value is determined on the basis of a mean on-time of the duty solenoid valves per control cycle and on the basis of a final duty ration in feed-back control.

EP-A-0,231,593 discloses a method of adaptively correcting the operation of a shift control system which includes a preparation phase during which fluid is supplied to the torque-establishing device for a predetermined time to fill the same in preparation for torque transmission.

According to an aspect of the present invention, there is provided a method of controlling the change in an automatic transmission from a lower speed ratio to a higher speed ratio as defined in claim 1.

The invention can adaptively control a closed throttle downshift in an automatic transmission in which a transmission aberration during a shift is diagnosed, to correct fully (or optionally, partially) the operation on the next closed throttle downshift between the same ranges.

Preferably, the method is capable of making large corrections initially and is limited to small changes thereafter.

In an embodiment, transmission input and output speeds are monitored during a closed throttle downshift, and departures from acceptable speed patterns and the times during the shift when the departures occur are identified. For closed-loop control, the relationship of commanded clutch pressures may be similarly monitored. Each particular type of departure calls for a particular remedy, and a suitable adjustment may be calculated based on the times and/or the commanded pressures at certain times, the adjustment being implemented by changing one or more initial conditions for the next shift of the same type. The adjustments may have to be large to make a full or significant partial correction at the next shift. Once sufficient corrections are made to effect shift convergence, large changes are inhibited and small increments are used instead.

The present invention is also directed to apparatus comprising means for carrying out the steps of the described method.

An embodiment of the present invention is described below, by way of illustration only, with reference to the accompanying drawings, in which:

Figure 1a is a system diagram of a fluid operated motor vehicle transmission, including several solenoid operated fluid pressure control valves, and a control unit;

Figure 1b is a table illustrating the clutch engagements required to establish the various speed ratios of the transmission of Figure 1a;

Figures 2, 3a and 3b are flow diagrams of an embodiment of method of controlling gear change by means of the controller of Figure 1a;

Figure 4, graphs A, B and C, illustrate on-coming pressure command, off-going pressure command and turbine speed, respectively, for clutch-to-clutch closed throttle downshifting;

Figure 5, graphs A and B, illustrate the on-coming slip and a turbine speed for the on-coming closed-loop operation;

Figures 6a - 6b, 8 and 11 are flow diagrams illustrating an embodiment of adaptive clutch control logic for the closed throttle downshift; and

Figures 7, 9 and 10 are graphs of turbine speed and commanded on-coming clutch pressures for some of the corrected aberrant shift conditions.

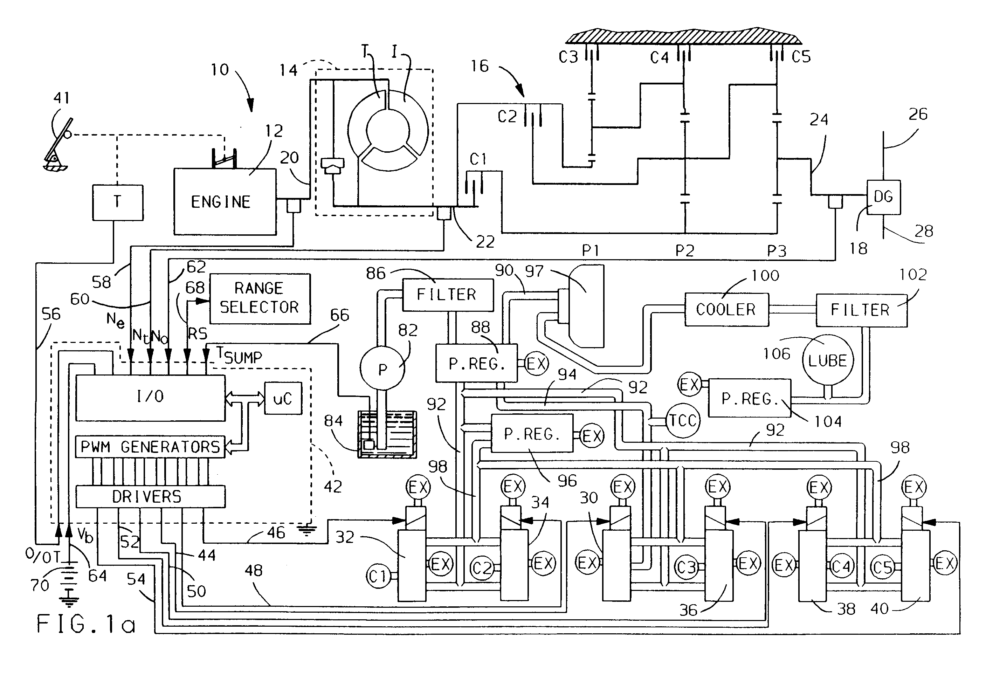

Referring now Figure 1a, the reference numeral 10 generally designates a motor vehicle drive train which includes a throttled internal combustion engine 12, a fluidic torque converter 14, a six-speed fluid operated power transmission 16 and a differential gear set (DG) 18. The engine 12 is connected to the torque converter 14 via shaft 20, the torque converter 14 is connected to the transmission 16 via shaft 22, the transmission 16 is connected to the differential gear set 18 via shaft 24 and the differential gearset is connected to a pair of drive wheels (not shown) via the prop shafts 26 and 28.

Gear shifts are accomplished by selectively engaging and disengaging brakes and clutches, herein called torque transmitting devices or clutches. These clutches are actuated by hydraulic pressure and upon engagement require a fill time before torque is transmitted between a driving and a driven friction element.

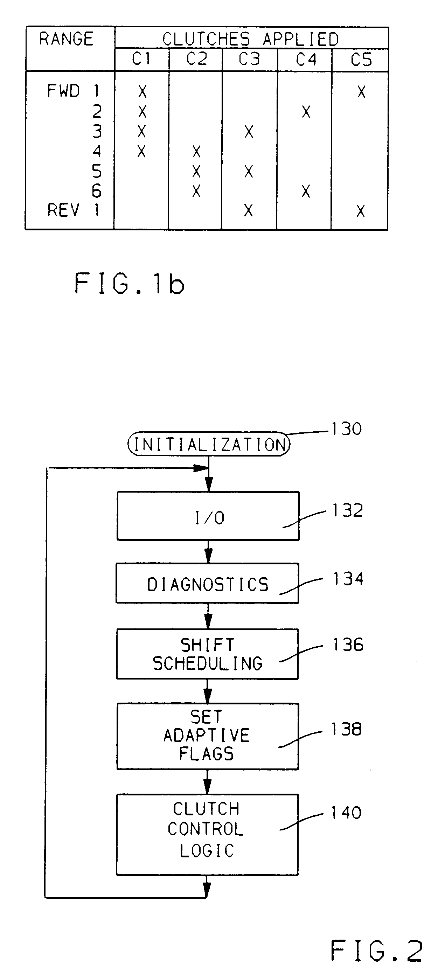

The speed and torque relationships between the engine 12 and the drive wheels of the vehicle are controlled by a fluid operated torque converter clutch, designated TCC, and five fluid operated transmission clutches, designated C1 - C5. The torque converter clutch TCC is selectively engaged by the solenoid operated control valve 30 to connect mechanically the impeller I and turbine T of torque converter 14. The clutches TCC, C1, C2, C3, C4, C5 are selectively engaged and disengaged by the solenoid operated control valves 30, 32, 34, 36, 38, 40 according to the diagram shown in Figure 1b, selectively to establish a desired transmission speed ratio. The illustrated transmission gear set provides one reverse ratio and six forward ratios, and is described in detail in U.S. Patent 4,070,927. An operator actuated accelerator pedal 41 positions the engine throttle for controlling the engine power output.

The operation of the solenoid operated control valves 30 - 40 is controlled by a computer-based control unit 42, shown in dotted outline, via lines 44 - 54 in response to various input signals representative of system parameters. Such inputs include an engine throttle position signal %T on line 56, an engine output shaft speed signal Ne on line 58, a torque converter output shaft speed signal Nt on line 60, a transmission output shaft speed signal No on line 62, a system supply voltage signal Vb on line 64, a transmission fluid temperature signal Tsump on line 66 and an operator range selector position signal RS on line 68. The system voltage is supplied by the storage battery 70, and the input signals are obtained with conventional electrical transducers such as potentiometers, thermistors and magnetic speed pickups.

Internally, the control unit 42 comprises a number of conventional devices including a microcomputer (uC) with internal clock and memory, an input/output device (I/O) and an array of pulse width modulated signal generators (PWM) and drivers (DR). As indicated below, a PWM generator and a driver (DR) are dedicated to each solenoid operated control valve 30 - 40. The PWM generator outputs are delivered to the respective drivers (DR) and are used to energize the respective solenoid operated control valves. The duty cycle of the PWM generator outputs determine the hydraulic pressure supplied by the solenoid operated control valves, with a low percent duty cycle yielding a low pressure and a high percent duty cycle yielding a high pressure for a normally closed valve.

The hydraulic circuit of transmission 16 includes a positive displacement pump 82 for supplying pressurized hydraulic fluid from the sump or reservoir 84, to the clutches TCC and C1 - C5 through various hydraulic and electro-hydraulic valving mechanisms. After passing through a main circuit filter 86, the fluid output of pump 82 is directed to a main pressure regulator valve 88 which develops regulated fluid pressures in lines 90 and 92.

The fluid in line 90, generally referred to as converter feed pressure, is directed through the torque converter 14, as schematically designated by the converter shell 97. After passing through a cooler 100 and cooler filter 102, the converter fluid is then regulated down to a lower pressure by the regulator valve 104 and directed to the transmission lube, or lubricant circuit 106.

The fluid in line 92, generally referred to as main or line pressure, is supplied as an input to the solenoid operated control valves 30 - 40, and also to the control pressure regulator valve 96. The control pressure regulator valve 96 develops a somewhat lower pressure in line 98, referred to herein as the control pressure, such pressure being directed to the solenoid of each control valve 30 - 40.

The fluid in line 94, referred to as the converter clutch pressure, is supplied directly by solenoid 30 to the torque converter clutch TCC to engage the same. This pressure is also supplied to the main pressure regulator valve 88 to provide a lower regulated line pressure in the converter lockup mode.

Figures 2, 3a - 3b, 6a - 6b, 8 and 11 are flow diagrams representative of computer program instructions executed by the computer-based control unit 42 of Figure 1 in carrying out the shift control technique described below.

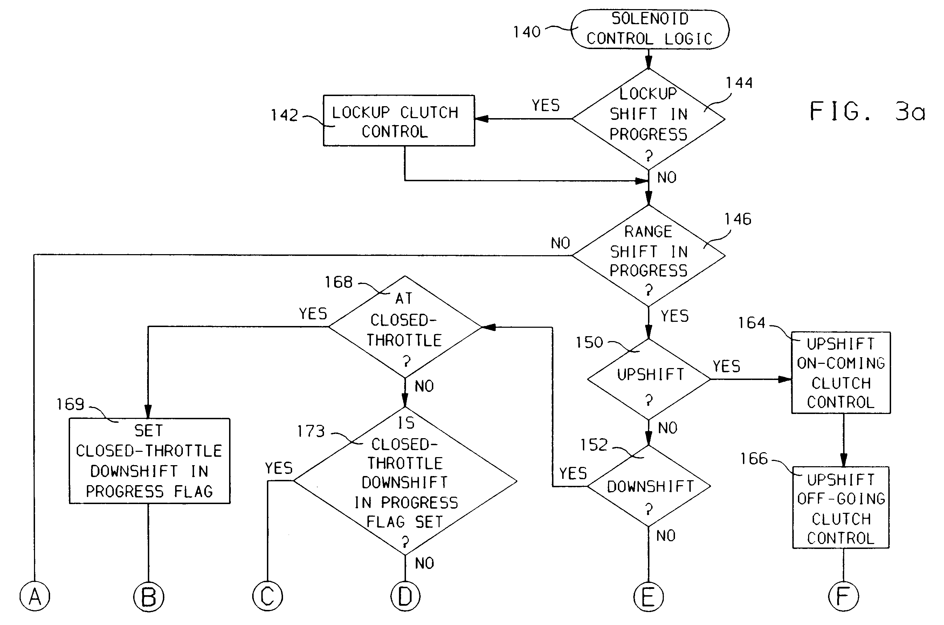

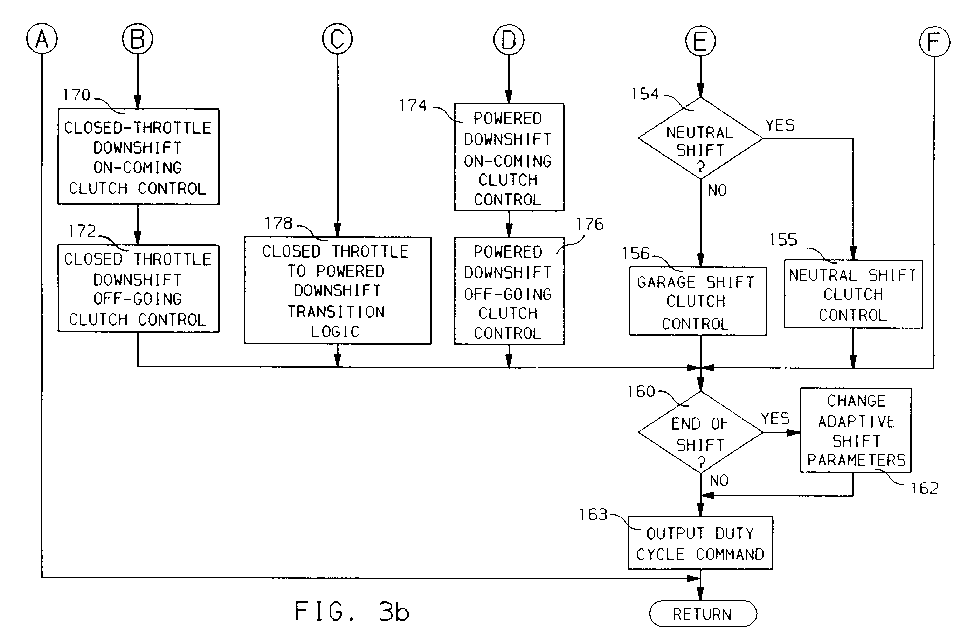

Figure 2 represents an executive or main loop program which directs the sequential execution of various subroutines. Block 130 designates a series of instructions executed at the initiation of each period of vehicle operation for setting the various timers, registers and variable values of control unit 42 to predetermined initial values. Thereafter, the blocks 132 - 140 are sequentially and repeatedly executed as indicated by the flow diagram lines. Block 132 reads the various input signal values and outputs the required control signals to the PWM generators and drivers for solenoid controlled valves 30 - 40. Blocks 134 - 138 contain diagnostic, shift scheduling, and adaptive flag logic. The clutch control logic block 140 analyzes the various system input signals described above in reference to Figure 1a, develops pressure command signals PCMD for application to the solenoid operated control valves at the next execution of block 132, and computes adaptive corrections based on the adaptive flags at shift completion. Block 140 also effects pulse-width-modulation of the solenoid drive voltage to carry out the pressure commands for specific shift operations. Block 140 is detailed in the flow chart of Figures 3a - 3b.

The flow diagram of Figures 3a - 3b sets forth the program for making decisions as to the type of range shift in progress, if any, and determines the specific control for the on-coming and the off-going clutches. The program also checks whether a shift has performed within specifications. If not, certain shift parameters are changed at shift completion according to predefined adaptive logic to correct the shift. First, lockup clutch control is executed 142 if a lockup shift is in progress 144, and it is then determined (from the shift schedule) whether a range shift is in progress 146. If not, the clutch control logic is exited. If a range shift is in progress 146, it is determined whether it is an upshift 150, a downshift 152, or a neutral shift 154. If it is none of these, it must be a garage shift 156 which executes shifts from neutral to either drive or reverse and shifts from drive to reverse or from reverse to drive. If it is a neutral shift 154, the neutral shift clutch control executes shifts from drive to neutral or from reverse to neutral 155. The control flows from either the upshift, downshift, neutral shift or the garage shift block to the end-of-shift test 160. Then, if the shift is completed 160, adaptive shift parameters are changed if required 162, and the duty cycle command is output 163. If the shift has not ended 160, the duty cycle command is output 163 before returning to the main loop (Figure 2).

If an upshift is indicated 150, the upshift on-coming clutch control 164 and the upshift off-going clutch control 166 are activated. If a downshift is indicated 152, it is next decided whether it is a closed throttle downshift or a powered downshift 168. If it is closed throttle downshift, a CLOSED-THROTTLE IN PROGRESS flag is set 169, the closed throttle on-coming clutch control is activated 170 and the closed throttle off-going clutch control is activated 172. If the shift is not at closed throttle 168, the CLOSED THROTTLE flag is checked 173. If the flag is not set, the powered downshift on-coming clutch control is activated 174 and then the powered downshift off-going clutch control is activated 176. If it is determined at block 173 that the CLOSED THROTTLE flag is set, the throttle opened during the course of the closed throttle downshift and a transition to powered downshift may be necessary; in this case, the transition logic is invoked 178. Finally, the program goes to the end of shift test 160.

Each control phase operates by setting pressures, pressure increments, times or other values to predefined calibrated values which are herein generally called "set", "preset", "given" or "certain" values. Each such value is chosen from a table of calibrated values for each specific transmission condition, throttle range and shift type. Thus, different values are supplied for upshift, downshift, etc., as well as each range shift, e.g., 1-2, 2-1, 4-3, 5-4, etc. Converter and lockup modes may also require separate sets of calibration values.

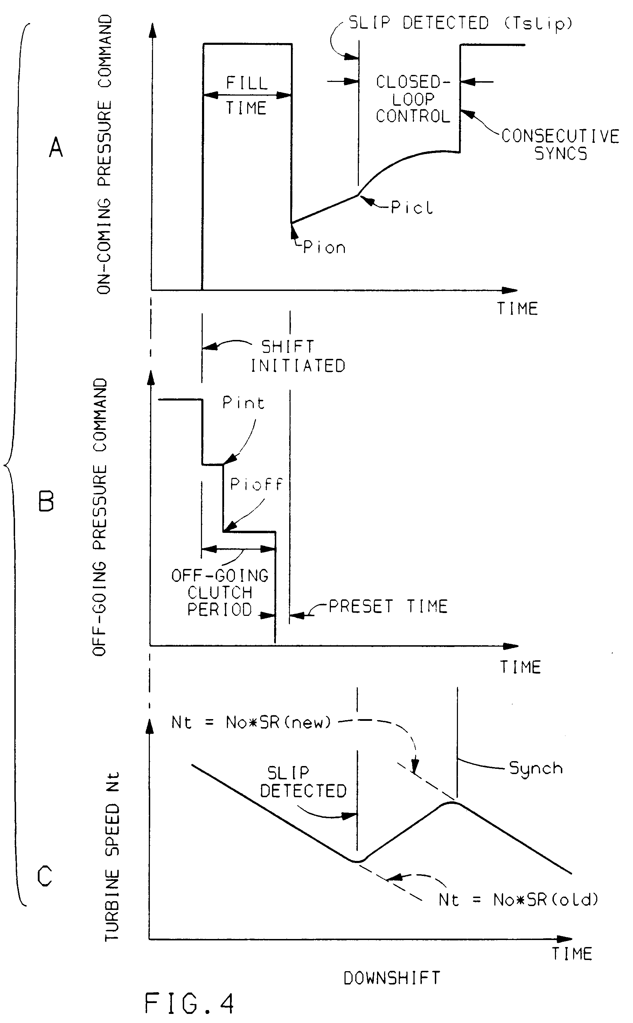

Figure 4, graphs A, B and C, show respectively the on-coming and off-going pressure commands for control of the on-coming and off-going clutches during a closed throttle downshift, and the turbine speed Nt. At shift initiation, the on-coming pressure command is set to maximum for a fill time to prepare the on-coming clutch to accept torque. During the fill time, the off-going clutch pressure command is stepped to an intermediate value Pint for a set time and is then stepped to a lower value Pioff until a preset time before the end of the fill time. Thus, the fill time minus the preset time determines the off-going clutch period. Then the off-going clutch is exhausted so that the on-coming clutch can take over when it is ready. The on-coming clutch pressure command is set to an initial pressure, Pion, and then ramped up until slip of the off-going clutch (or turbine pullup) is detected. Turbine pullup is a result of the beginning of off-going clutch slip. Pullup is detected by the turbine speed Nt becoming greater than the product of the output speed No and the old or lower speed ratio SR(old) plus a constant K1 or $Nt > No * SR(old) + K1$.

The off-going clutch slip triggers closed-loop control of the on-coming clutch pressure. The initial closed-loop pressure is Picl. The on-coming clutch slip is monitored and controlled to a calculated slip profile. This closed-loop slip profile control continues until on-coming clutch synchronization has been detected for several consecutive times. Synchronization is detected when the turbine speed is within a threshold value, K2, of the output speed times the new or high speed ratio, or $ABS(Nt - No * SR(new)) \leq K2$. The final closed-loop pressure is Pfcl.

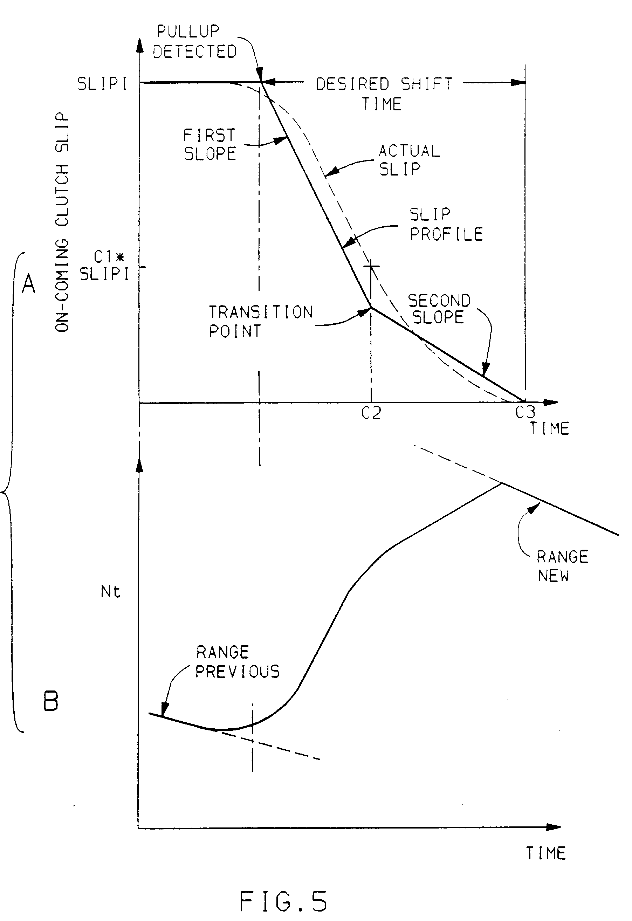

The closed-loop profile control is better explained with reference to Figure 5, graph A, which shows the on-coming slip speed profile in solid lines and actual slip speed in dashed lines. Slip is determined by comparing the turbine speed to the output speed. Specifically, slip speed is the difference (times a conversion factor K3) between turbine speed and the product of the output speed, and the speed ratio of the higher or new range or $SLIP = K3 * (Nt - No*SR(new))$. Thus as soon as a shift command is issued there is slip in the on-coming clutch. The initial slip speed, SLIPI, is the absolute slip speed value at the initiation of closed-loop. The slip profile begins at that point and decreases at a fixed rate, called the first slope. Then at a determined point, the rate reduces to a second slope. The slopes are chosen so that, ideally, the actual slip speed can be made to go to zero smoothly within a given time period. The second slope is less steep than the first slope and reduces end of shift torque disturbance by more closely matching the acceleration rates on both sides of the on-coming clutch. By using slip speed as the control target, both turbine and output speeds are taken into account when controlling the shift duration.

To determine the slopes, three constants C1, C2 and C3 are defined. The constant C1 is a fraction of SLIPI at which the second slope begins; i.e., if $SLIP \leq C1*SLIPI$, the slope changes to the second slope. The constant C2 is the desired time to utilize the first slope. The constant C3 is the desired overall closed-loop time. The constants C2 and C3 are used only for slope calculations and not for direct timing purposes. Thus, the first slope (SLOPE1) is given by $SLOPE1 = [SLIPI-(C1*SLIPI)]/C2$. The second slope (SLOPE2) is given by $SLOPE2 = C1*SLIPI/(C3-C2)$.

Proportional control is carried out by correcting the on-coming clutch command pressure by a term which is proportional to slip speed error. The effect on turbine speed is shown in Figure 5, graph B, where pullup is detected when turbine speed increases a certain amount above the lower dashed line which represents the product of output speed (No) and speed ratio for the old range (SR OLD). Thereafter the turbine speed increases in accordance with the profile control where on-coming clutch slip is seen to be the difference (times a conversion factor) between the turbine speed curve and the upper dashed line, which represents the product of output speed (No) and speed ratio for the new range (SR NEW). The arrival at synchronization speed is determined by detecting synchronization (sync) a preset number of times in consecutive-loops. This signals completion of the closed-loop profile control, and maximum pressure is applied to the on-coming clutch.

The control has several advantages. The intermediate off-going pressure value Pint reduces clutch pressure undershoot caused by solenoid dynamics. The lower off-going pressure Pioff is sufficient to maintain the old range with the off-going clutch and allows transition to off-going clutch control in the event of a throttle increase before the off-going clutch is exhausted. By exhausting the off-going clutch before the end of fill time it is assured that off-going clutch capacity is removed before application of the on-coming clutch and thereby eliminates clutch tie-up and associated shift quality degradation.

The off-going clutch slip is used to detect turbine pullup and thereby indicate that on-coming clutch capacity has been achieved. This automatically sets the time for actuation of the closed-loop control. The on-coming pressure command is ramped up following fill termination to achieve a timely turbine pullup when the initial on-coming command pressure is low. If the off-going clutch slip is detected during the fill period, the fill period is terminated early to reduce the overfill torque disturbance.

The closed-loop profile controls the on-coming clutch slip (rather than turbine speed) to ensure that changes in output speed (due to braking) are also taken into account when controlling shift duration. The reduced slope, after a specified fraction of the initial on-coming clutch slip is achieved, reduces end of shift torque disturbance by more closely matching the acceleration rates on both sides of the on-coming clutch. Maintaining closed-loop control until synchronization has been detected in several consecutive control-loops assures that true synchronization has been achieved and maintained before full clutch application is made.

Adaptive control adjusts in this embodiment certain parameters for each type of shift independently of other types. That is, a 2-1 closed throttle downshift is treated separately from a 4-3 closed throttle downshift, and the shift quality of each is separately monitored and the parameters for each type are individually adjusted and stored. The process of adapting the parameters for a particular type of shift is on-going and proceeds during each shift of that type independently of the other types of shifts.

At the end of each completed shift, the block 162 sets adaptive conditions. This is accomplished in three phases: diagnosing the shift to identify input and/or output speed aberrations, determining whether fast or slow adaptive adjustment is permitted, and calculating new parameter values for the next shift. If fast adaptive adjustment (fast adapt) is permitted, a parameter value is calculated which is generally targeted to correct fully the aberration in the next shift. If slow adaptive adjustment (slow adapt) is required, the existing parameter is changed by a set increment. The system is capable of being programmed to make a partial correction in the fast adaptive mode and this is sometimes employed to avoid a possible "over correction".

The distinction between fast and slow adaptive adjustment is based on the need to make potentially large adjustments when a new or rebuilt transmission is initially operated in a given vehicle/engine combination as opposed to the need to make small updates due to clutch plate wear, engine performance degradation, oil viscosity degradation and the like during the life of the transmission. Initially the electronic control is set to make fast adaptive adjustments for each type of shift. As soon as all the parameters are correctly adjusted for that type of shift, as evidenced by a shift wherein no aberrations are detected, the shift calibration is said to be "converged" to an optimal solution and a memory flag is set to control future shifts of that type in the slow adaptive mode. Once the controller 42 enters the slow mode, provision is made to assure that a misleading speed signal caused by system noises can not trigger a large adjustment when little, if any, adjustment is appropriate.

The diagnosis of shift aberrations is accomplished in this embodiment by monitoring key shift quality indicators during the shift and setting a memory flag whenever a certain speed change occurs under given conditions, a certain change of command pressure takes place, or certain corrective action has already been taken. Thus the shift pattern of the transmission is embodied in these indicators. Then by a logical assessment of the states of the several flags the presence of a given aberration is determined and a suitable adjustment can then be calculated. These flags are described below.

## Adaptive Flags

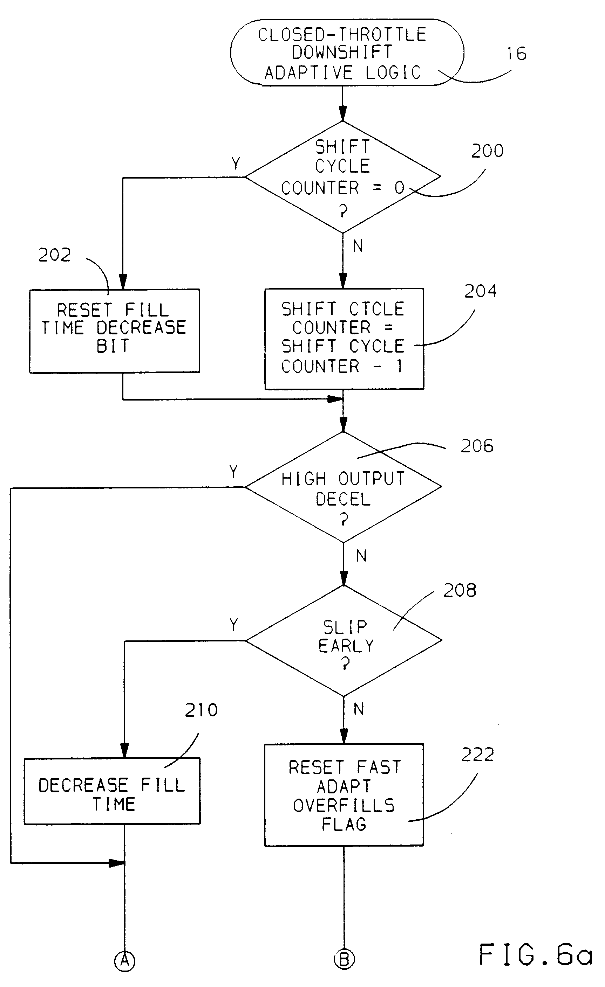

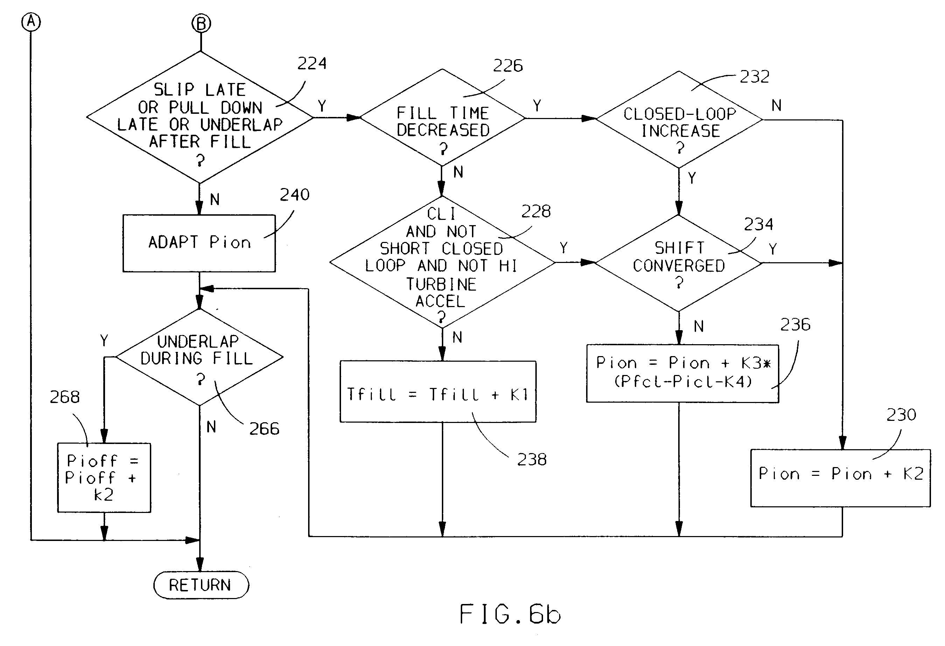

The following flags are set if the conditions associated with them apply. They are used in the adaptive adjustment described with reference to Figures 6a and 6b.

SLIP EARLY: Off-going clutch slip is detected within a set time window from the end of the fill period for a given number of times.

SLIP LATE: Off-going clutch slip is not detected within a set time window from the end of the fill period.

UNDERLAP DURING FILL: Underlap is detected before the end of the fill period. Underlap is the condition when $Nt < No^*SR(old) + Ku$ occurs for a number of consecutive control loops where Ku is a negative calibration constant.

UNDERLAP AFTER FILL: Underlap is detected after the end of the fill period.

CLOSED-LOOP INCREASE (CLI): A closed-loop increase occurs when the commanded on-coming pressure at the first detected sync exceeds the initial closed-loop pressure command by a threshold amount.

CLOSED-LOOP DECREASE: A closed-loop decrease occurs when the commanded on-coming pressure at the first detected sync is below the initial closed-loop pressure command by a threshold amount.

HI OUTPUT DECEL: Output acceleration is less than a given amount at shift initiation.

HI TURBINE ACCEL: Following detection of off-going clutch slip, turbine acceleration is greater than a given amount for a set number of control loops.

SHORT SHIFT: Time from first slip of the off-going clutch to first sync is less than a set amount.

LONG SHIFT: Time from first slip of the off-going clutch to first sync is greater than a set amount.

SHORT CLOSED-LOOP: Time from first slip to first sync is less than a set amount (different from the set amount for the SHORT SHIFT).

PULL-DOWN LATE: If turbine flare is present, then the time to maximum turbine speed is greater than the fill time by a set amount. Flare is defined as Nt > No*SR(new) + K.

FILL TIME DECREASED: A memory flag which indicates that the fill time has been decreased within a calibration number of shifts.

FAST ADAPT OVERFILLS (FAO): A memory flag which indicates that corrections to overfills will use the fast adaptive calculation.

SHIFT CONVERGED: A memory flag which indicates that the shift calibration has converged to an optimal solution.

Adaptive Downshift Logic

The adaptive control for the closed throttle downshift adjusts the stored parameters corresponding to fill time, Tfill, initial on-coming pressure command, Pion, and off-going pressure command, Pioff. In the slow adaptive mode, pressure adjustments K2 are made to Pion and Pioff, and a time adjustment K1 is made to Tfill. In the fast adaptive mode, calculations are used to determine the amount of adjustment to decrease fill time, Tfill, and to adjust the initial on-coming pressure command Pion.

The flow diagram of Figures 6a - 6b shows the progress of the adaptive closed throttle downshift program in block 162. If the shift cycle counter (SCC) is zero 200, the FILL TIME DECREASED flag is reset 202. If SCC is not zero 200, it is decremented 204. If the HIGH OUTPUT DECEL flag is set 206, the adaptive program exits to the main program. This is done because sudden deceleration (such as caused by hard braking) can distort the speed signals and cause false flags to be set. If the HI OUTPUT DECEL flag is not set, the SLIP EARLY flag is tested 208. If the flag is set, it is an indication of overfill of the on-coming clutch. Then the fill time is decreased 210 to correct the overfill condition.

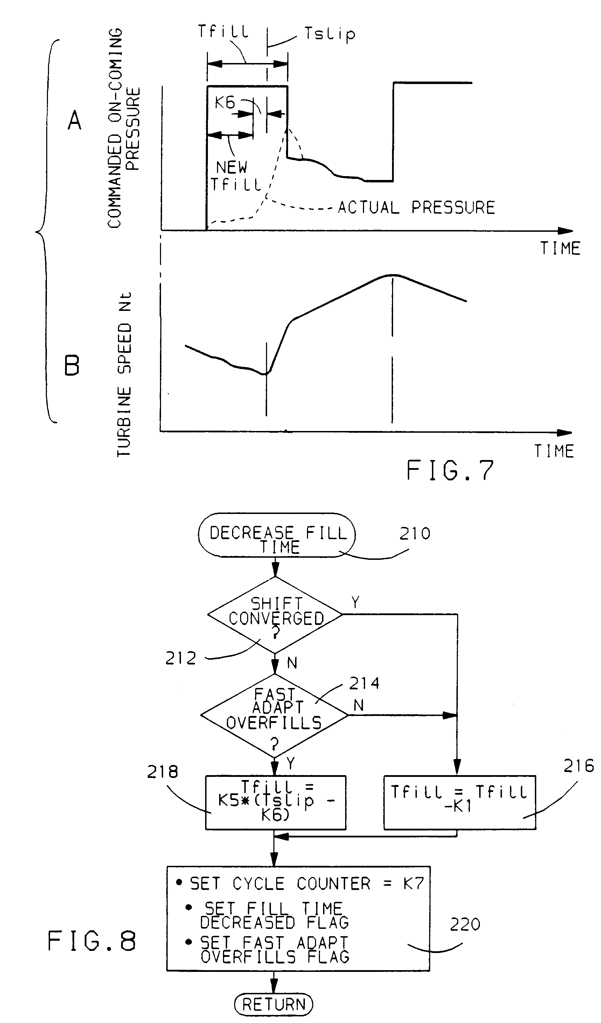

The overfill condition is illustrated in Figure 7 which shows the actual pressure becoming large during the fill time causing turbine speed pullup at time Tslip during fill time. This condition sets the SLIP EARLY flag. The decrease fill time routine is shown in Figure 8. If the shift has converged 212 or the FAST ADAPT OVERFILLS flag is not set 214, the slow adapt mode is selected and the fill time is decremented by the value K1 216. Otherwise, the fast adapt mode is selected and the fill time is calculated as Tfill = K5*(Tslip - K6), where K5 is the percentage of the estimated fill time to be used, Tslip is the time after shift initiation when slip occurred, and K6 is a time offset from the detection of slip for the estimated fill time 218. Thus, if K5 is chosen to be 100%, the new fill time will be set to expire the offset time K6 before slip occurs in the off-going clutch as indicated in Figure 7. After the adjustment of Tfill, the Shift Cycle Counter is set to a value K7, the FILL TIME DECREASED flag is set and the FAST ADAPT OVERFILLS (FAO) flag is set 220. Then the adaptive program is exited. The action in block 220 assures that the FILL TIME DECREASED flag will remain set until the number K7 of closed throttle downshifts between the same ranges have run.

Referring again to Figures 6a - 6b, if there is no early slip 208, the FAO flag is reset 222. The FAO flag logic prevents the targeting of a large decrease in the fill time as a result of noise disturbance. Initially, the FAO flag is set so that overfills will be adapted using the fast adaptive algorithm. However, once a shift is done where an overfill is not detected through the EARLY SLIP flag 208, then the FAO flag will be reset 222. If a later shift detects an overfill while the FAO flag is clear, then only a small decrease to the fill time will be allowed 214, 216. The FAO flag will then be set 220 so that if a second consecutive overfill is detected, the fast adaptive change will be used.

After the FAO flag is reset 222, block 224 detects the presence of an underfilled on-coming clutch. If the SLIP LATE flag, the PULL DOWN LATE flag or the UNDERLAP AFTER FILL flag is set, the clutch is diagnosed as underfilled. Blocks 226 and 228 determine whether the cause of underfill is a low fill time Tfill or a low initial on-coming pressure Pion. If the FILL TIME DECREASED flag is set 226, then the fill time does not need to be increased and the on-coming pressure will be increased using the slow mode 230, if there is no closed-loop increase 232 or if the shift is converged 234. The fast adaptive algorithm 236 will be used if there is a closed-loop increase 232 and the shift is not converged 234.

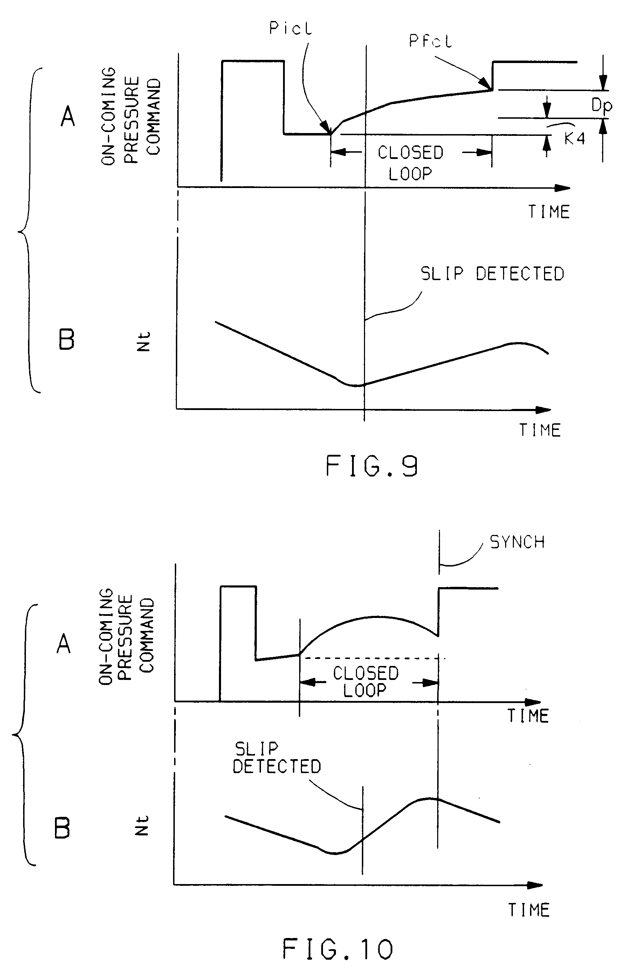

The fast adaptive algorithm for on-coming pressure is best described with reference to Figure 9, graph A, which shows the on-coming pressure experiencing an increase during the closed-loop phase. The initial closed-loop pressure is Picl and the final closed-loop pressure is Pfcl. A programmed desired pressure increase is K4. The CLOSED-LOOP INCREASE flag is set when Pfcl-Picl exceeds a threshold. The full correction Dp of Pion is thus Pfcl-Picl-K4. If a partial correction is desired, a percentage K3 of the full value may be used. Thus the complete fast adaptive algorithm is Pion = Pion + K3*(Pfcl-Picl-K4) as set forth in block 236.

If the FILL TIME DECREASED flag is not set 226, then block 228 is used to determine the cause of the underfill. If a CLI (CLOSED-LOOP INCREASE) flag is not set (or is not valid), then the on-coming pressure is assumed to be correct and the fill time is increased 238. If a CLI flag is present and is valid, then the on-coming pressure must be too low and is therefore increased 236, 230. This is illustrated in Figure 9. In Graph A, the closed-loop phase begins before slip is detected due to a clock timeout from the end of fill. Graph B shows the turbine speed Nt (which is pulled up indicating clutch slip) after the closed loop begins. Thus, the SLIP LATE flag is set and the CLI flag is also set because of the pressure increase. Thus, the initial pressure Pion should be increased to bring about slip shortly after the end of the fill period.

Two constraints, the SHORT CLOSED LOOP flag and the HI TURBINE ACCEL flag, are used to test for the validity of the CLI flag. The SHORT CLOSED-LOOP flag indicates that the shift was not in closed-loop long enough to ensure that the CLI flag is valid. This could happen when closed-loop is initiated following a timeout condition from the end of fill. This is shown in Figure 10, Graphs A and B. In this case, closed-loop pressure will begin to increase until slip occurs (i.e. turbine speed is pulled up). The short closed-loop period ends (sync occurs) before the on-coming pressure can decrease to the desired value. If the initial on-coming pressure was correct and the fill time was too short, the increase in initial on-coming pressure Pion during this period would therefore not be desirable. The SHORT CLOSED-LOOP flag is then used to indicate that the closed-loop increase was not valid. Additionally, the HI TURBINE ACCEL flag indicates that the on-coming pressure is too high, which contradicts a CLI flag. Thus, if either the SHORT CLOSED-LOOP flag or the HI TURBINE ACCEL flag is set, then the fill time is assumed to be the cause of the underfill. If this assumption is incorrect, the increase in fill time will cause an overfill to occur. Thus, after correcting for the overfill, the FILL TIME DECREASED flag will be set and will cause the initial on-coming pressure to be corrected.

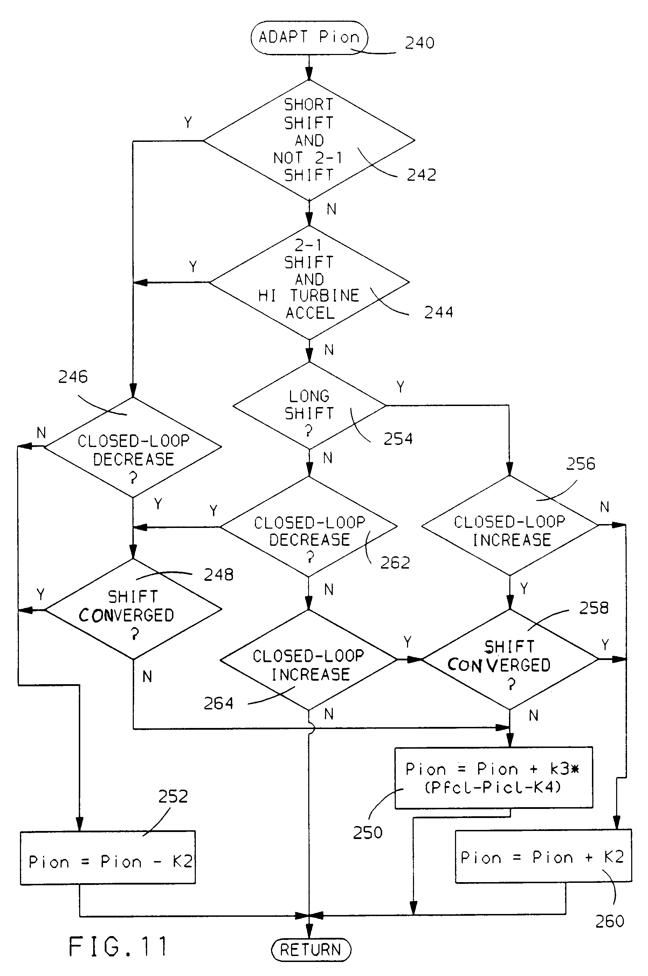

If the conditions tested in block 224 do not indicate an underfilled clutch, an Adapt Pion routine is entered 240. As shown in Figure 11, a test is made for high initial on-coming pressure Pion. For all shifts except a 2-1 shift, a SHORT SHIFT flag indicates high Pion 242. A 2-1 shift is a special case because for that shift, the shift time is significantly dependent on output deceleration. High turbine acceleration is used to indicate a high initial on-coming pressure for the 2-1 shift 244. When high Pion is thus determined, Pion is decreased. If the CLOSED-LOOP DECREASE flag is set 246 and the shift is not converged 248, the same fast adapt calculation as in block 236 for Pion adjustment is used 250; otherwise, the slow adapt calculation for pressure decrease is used 252. If a LONG SHIFT flag is set 254, a low initial on-coming pressure Pion is indicated. Then, if there is a closed-loop increase 256 and the shift is not converged 258, the fast adapt pressure adjustment is used 250; otherwise, the slow adapt pressure increase is used 260. If there is no long shift 254, there is a test for the CLOSED-LOOP DECREASE and the CLOSED-LOOP INCREASE flags 262, 264 and Pion is decreased or increased, respectively, if a flag is set. If neither flag is set, the program returns to the program of Figure 6.

The final test in the adaptive program is for the flap UNDERLAP DURING FILL 266. Underlap is detected by sensing when the turbine speed decreases a given amount below a value corresponding to the product of the output speed and the lower speed ratio. This condition implies that neither clutch is transmitting sufficient torque and the transmission is lapsing into neutral. When this occurs during clutch fill, it is an indication that the initial off-going pressure Pioff is too low. The pressure Pioff is then increased a small amount K2 268. Then the program returns to the main control program.

Reference is made to our co-pending applications no. EP-A-0,435,378, no. EP-A-0,436,977, no. EP-A-0,435,376, no. EP-A-0,435,372, and no. EP-A-0,436,978 filed and published the same day as this application.

**Claims**

1. A method of controlling the change in an automatic transmission of a vehicle from an off-going fluid pressure operated torque transmitting device (C1-C5) associated with a lower speed ratio to an on-coming fluid pressure operated torque transmitting device (C1-C5) associated with a higher speed ratio when the engine throttle is substantially closed, wherein the off-going torque transmitting device is disengaged substantially concurrently with the engagement of the on-coming torque transmitting device, the transmission including an input (22), an output (24), a turbine (14) connected to the input to couple driving torque thereto, and turbine speed (Nt) and output speed (No) sensing means; the method comprising the steps of disengaging the off-going torque transmitting device by reducing its pre-change operating pressure on the basis of a predefined disengagement procedure; engaging the on-coming torque transmitting device by applying on-coming command pressure for a predefined fill period, setting the on-coming command pressure to an initial on-coming command pressure and subsequently controlling the on-coming command pressure in a period of closed-loop control to effect progressive engagement of the on-coming torque transmitting device; detecting the occurrence of an increase in on-coming command pressure above a predetermined value during the period of the closed-loop control or an on-coming torque transmitting device underfill condition by sensing speed aberrations indicative of such underfill; and, on the basis of the detection, adjusting a first stored parameter related to the value of the initial on-coming command pressure so as to increase the initial on-coming command pressure, or adjusting a second stored parameter related to the length of the fill period so as to increase the fill period.

2. A method according to Claim 1, wherein the first parameter is adjusted when the increase in on-coming command pressure during the period of closed-loop control is above the predetermined value.

3. A method according to Claim 2, wherein the first parameter is adjusted when the period of closed-loop control is longer than a predetermined length of time.

4. A method according to Claim 1, 2 or 3, wherein the second stored parameter is increased when the increase in on-coming command pressure during the period of the closed-loop control is less than the predetermined value.

5. A method according to any preceding Claim, wherein the second stored parameter is adjusted when the period of closed-loop control is shorter than a predetermined length of time.

6. A method according to any preceding Claim, including the steps of detecting slip of the off-going torque transmitting device and substantial synchronization of the on-coming torque transmitting device, measuring the time between the detected slip and the detected synchronization, and inhibiting adjustment of the first stored parameter when the measured period is less than a preset amount.

7. A method according to any preceding Claim, including the steps of measuring turbine acceleration, and inhibiting adjustment of the first stored parameter when the acceleration is above a preset value.

8. A method according to any preceding Claim, wherein the step of adjusting the first stored parameter comprises the step of adjusting the first stored parameter by a relatively larger amount prior to the occurrence of a non-aberrant change, and by a relatively smaller amount after the occurrence of a non-aberrant change, wherein a non-aberrant change is determined by the occurrence of a change in which no adjustment of the first or second parameters is made.

9. A method according to any preceding Claim, including the steps of measuring turbine deceleration, and inhibiting adjustment of the first and second stored parameters when the deceleration is greater than a preset value.

10. A method according to any preceding Claim, wherein the step of determining an on-coming torque transmitting device underfill condition comprises the step of detecting failure of slip of the on-coming torque transmitting device on the basis of turbine speed and output speed, wherein slip is determined to have occurred when turbine speed is increased above the turbine speed at the corresponding output speed at the higher speed ratio.

11. A method according to any preceding Claim, wherein the step of determining an on-coming torque transmitting device underfill condition comprises the step of detecting underlap after the fill time, wherein underlap is determined to have occurred by a decrease in turbine speed below the turbine speed corresponding to the output speed at the higher speed ratio.

12. A method according to any preceding Claim, wherein the step of determining an on-coming torque transmitting device underfill condition comprises the step of detecting the occurrence of flare after a predetermined time after the end of the fill period.

13. A method according to Claim 1, including the steps of detecting whether the on-coming command pressure is above a predetermined pressure by sensing the occurrence of speed aberrations; reducing the on-coming command pressure on sensing speed aberrations by adjusting the second stored parameter so as to reduce the fill period; and, on a subsequent change when the on-coming command pressure is determined to be below the required pressure, adjusting the first stored parameter if the fill period has previously been reduced.

**Patentansprüche**

1. Ein Verfahren zum Regeln der Änderung in einem Automatikgetriebe eines Fahrzeugs von einer ausrückenden, fluiddruckbetriebenen, Drehmoment übertragenden Vorrichtung (C1 - C5), welche einem niedrigeren Übersetzungsverhältnis zugeordnet ist, zu einer einrückenden, fluiddruckbetriebenen, Drehmoment übertragenden Vorrichtung (C1 - C5), die einem höheren Übersetzungsverhältnis zugeordnet ist, wenn die Motordrossel im wesentlichen geschlossen ist, worin die ausrückende, Drehmoment übertragende Vorrichtung im wesentlichen gleichzeitig mit dem Eingriff der einrückenden, Drehmoment übertragenden Vorrichtung außer Eingriff gebracht wird, wobei das Getriebe einschließt einen Antrieb (22), einen Abtrieb (24), eine Turbine (14), welche mit den Antrieb verbunden ist, um ein Antriebsdrehmoment daran zu koppeln, und ein Turbinengeschwindigkeits-(Nt)- und Abtriebsgeschwindigkeits-(No)-Meßmittel; wobei das Verfahren die Schritte aufweist, daß die ausrückende, Drehmoment übertragende Vorrichtung außer Eingriff gebracht wird, indem ihr Betriebsdruck vor einer Änderung auf der Grundlage eines vorher definierten Verfahrens zum außer Eingriff bringen reduziert wird, die einrückende, Drehmoment übertragende Vorrichtung in Eingriff gebracht wird, indem ein Einrück-Befehlsdruck für eine vorher definierte Füllperiode angewandt wird, wobei der Einrück-Befehlsdruck auf einen anfänglichen Einrück-Befehlsdruck eingestellt wird und nachfolgend der Einrück-Befehlsdruck in einer Periode einer Regelung mit geschlossener Schleife geregelt wird, um einen fortschreitenden Eingriff der einrückenden, Drehmoment übertragenden Vorrichtung zu bewirken; das Auftreten einer Zunahme in einem Einrück-Befehlsdruck über einen vorher bestimmten Wert während der Periode der Regelung mit geschlossener Schleife oder ein Zustand einer mäßigen Füllung der einrückenden, Drehmoment übertragenden Vorrichtung festgestellt wird, indem Geschwindigkeitsabweichungen, welche eine derartige mäßige Füllung anzeigen, gemessen werden; und auf der Grundlage der Feststellung ein erster gespeicherter Parameter eingestellt wird, der sich auf den Wert des anfänglichen Einrück-Befehlsdruckes bezieht, um den anfänglichen Einrück-Befehlsdruck zu erhöhen, oder einen zweiten gespeicherten Parameter einzustellen, der sich auf die Länge der Füllperiode bezieht, um die Füllperiode zu erhöhen.

2. Ein Verfahren nach Anspruch 1, worin der erste Parameter eingestellt wird, wenn die Zunahme in einem Einrück-Befehlsdruck während der Periode einer Regelung mit geschlossener Schleife oberhalb des vorher bestimmten Wertes liegt.

3. Ein Verfahren nach Anspruch 2, worin der erste Parameter eingestellt wird, wenn die Periode einer Regelung mit geschlossener Schleife länger als eine vorher bestimmte Zeitdauer ist.

4. Ein Verfahren nach Anspruch 1, 2 oder 3, worin der zweite gespeicherte Parameter erhöht wird, wenn die Zunahme in einem Einrück-Befehlsdruck während der Periode der Regelung mit geschlossener Schleife geringer als der vorher bestimmte Wert ist.

5. Ein Verfahren nach irgendeinem vorhergehenden Anspruch, worin der zweite gespeicherte Parameter eingestellt wird, wenn die Periode einer Regelung mit geschlossener Schleife kürzer als eine vorher bestimmte Zeitdauer ist.

6. Ein Verfahren nach irgendeinem vorhergehenden Anspruch, welches die Schritte einschließt, daß ein Schlupf der ausrückenden, Drehmoment übertragenden Vorrichtung und eine wesentliche Synchronisation der einrückenden, Drehmoment übertragenden Vorrichtung festgestellt wird, die Zeit zwischen dem festgestellten Schlupf und der festgestellten Synchronisation gemessen wird und eine Einstellung des ersten gespeicherten Parameters verzögert wird, wenn die gemessene Periode kürzer als ein vorher eingestellter Betrag ist.

7. Ein Verfahren nach irgendeinem vorhergehenden Anspruch, welches die Schritte einschließt, daß eine Turbinenbeschleunigung gemessen wird und eine Einstellung des ersten gespeicherten Parameters verzögert wird, wenn die Beschleunigung oberhalb eines vorher eingestellten Wertes liegt.

8. Ein Verfahren nach irgendeinem vorhergehenden Anspruch, worin der Schritt, daß der erste gespeicherte Parameter eingestellt wird, den Schritt aufweist, daß der erste gespeicherte Parameter um einen relativ größeren Betrag vor dem Auftreten einer nicht abweichenden Änderung und um einen relativ kleineren Betrag nach dem Auftreten einer nicht abweichenden Änderung eingestellt wird, worin eine nicht abweichende Änderung durch das Auftreten einer Änderung bestimmt ist, in der keine Einstellung der ersten oder zweiten Parameter vorgenommen wird.

9. Ein Verfahren nach irgendeinem vorhergehenden Anspruch, welches die Schritte einschließt, daß eine Turbinenverzögerung bzw. -geschwindigkeitsabnahme gemessen wird und eine Einstellung der ersten und zweiten gespeicherten Parameter verzögert wird, wenn die Verzögerung bzw. Geschwindigkeitsabnahme größer als ein vorher eingestellter Wert ist.

10. Ein Verfahren nach irgendeinem vorhergehenden Anspruch, worin der Schritt, daß ein Zustand einer mäßigen Füllung einer einrückenden, Drehmoment übertragenden Vorrichtung bestimmt wird, den Schritt aufweist, daß ein Schlupfversagen der einrückenden, Drehmoment übertragenden Vorrichtung auf der Grundlage einer Turbinengeschwindigkeit und Abtriebsgeschwindigkeit festgestellt wird, worin bestimmt wird, daß der Schlupf aufgetreten ist, wenn die Turbinengeschwindigkeit über die Turbinengeschwindigkeit bei der entsprechenden Abtriebsgeschwindigkeit bei dem höheren Übersetzungsverhältnis erhöht wird.

11. Ein Verfahren nach irgendeinem vorhergehenden Anspruch, worin der Schritt, daß ein Zustand einer mäßigen Füllung einer einrückenden, Drehmoment übertragenden Vorrichtung bestimmt wird, den Schritt aufweist, daß eine Minderleistung bzw. schlechte Überdeckung nach der Füllzeit festgestellt wird, worin durch eine Abnahme in einer Turbinengeschwindigkeit unter die Turbinengeschwindigkeit, welche der Abtriebsgeschwindigkeit bei dem höheren Übersetzungsverhältnis entspricht, bestimmt wird, daß eine Minderleistung bzw. schlechte Überdeckung aufgetreten ist.

12. Ein Verfahren nach irgendeinem vorhergehenden Anspruch, worin der Schritt, daß ein Zustand einer mäßigen Füllung einer einrückenden, Drehmoment übertragenden Vorrichtung bestimmt wird, den Schritt aufweist, daß das Auftreten eines Anstiegs nach einer vorher bestimmten Zeit nach dem Ende der Füllperiode festgestellt wird.

13. Ein Verfahren nach Anspruch 1, welches die Schritte einschließt, daß festgestellt wird, ob der Einrück-Befehlsdruck oberhalb eines vorher bestimmten Druckes liegt, indem das Auftreten von Geschwindigkeitsabweichungen gemessen wird; der Einrück-Befehlsdruck auf gemessene Geschwindigkeitsabweichungen hin reduziert wird, indem der zweite gespeicherte Parameter eingestellt wird, um die Füllperiode zu reduzieren; und bei einer nachfolgenden Änderung, wenn bestimmt wird, daß der Einrück-Befehlsdruck unterhalb) des erforderlichen Druckes liegt, der erste gespeicherte Parameter eingestellt wird falls die Füllperiode vorher reduziert worden ist.

**Revendications**

1. Procédé de commande de changement de vitesse dans une boîte de vitesse automatique de véhicule entre un dispositif de transmission de couple de départ actionné par pression de fluide (C1 à C5) associé à un rapport de vitesse inférieur et un dispositif de transmission de couple d'arrivée (C1 à C5) actionné par pression de fluide associé à un rapport de vitesse supérieur lorsque le papillon des gaz du moteur est sensiblement fermé, dans lequel le dispositif de transmission de couple de départ est désenclenché sensiblement en même temps que le dispositif transmetteur de couple d'arrivée est enclenché, la boîte de vitesse comprenant une entrée (22), une sortie (24), une turbine (14) reliée à l'entrée pour y coupler un couple d'entraînement et des moyens de détection de la vitesse de la turbine (Nt) et de la vitesse de sortie (No), le procédé comprenant les étapes consistant à désenclencher le dispositif de transmission de couple de départ en réduisant sa pression d'actionnement de préchangement sur la base d'une procédure de désenclenchement prédéfinie, à enclencher le dispositif de transmission de couple d'arrivée par application d'une pression de commande d'arrivée pendant une période de remplissage prédéfinie, à régler la pression de commande d'arrivée à une pression de commande d'arrivée initiale et à commander ensuite la pression de commande d'arrivée dans une période de commande en boucle fermée pour effectuer l'enclenchement progressif du dispositif de transmission de couple d'arrivée, à détecter l'apparition d'une augmentation de la pression de commande d'arrivée au-dessus d'une valeur prédéterminée au cours de la période de la commande en boucle fermée ou un état de sous-remplissage du dispositif de transmission de couple d'arrivée en détectant des aberrations de vitesse indicatives de ce sous-remplissage, et, sur la base de la détection, à ajuster un premier paramètre stocké apparenté à la valeur de la pression de commande d'arrivée initiale de manière à augmenter la pression de commande d'arrivée initiale ou à ajuster un deuxième paramètre stocké apparenté à la longueur de la période de remplissage de manière à augmenter la période de remplissage.

2. Procédé selon la revendication 1, dans lequel le premier paramètre est ajusté lorsque l'augmentation de la pression de commande d'arrivée au cours de la période de commande en boucle fermée est supérieure à la valeur prédéterminée.

3. Procédé selon la revendication 2, dans lequel le premier paramètre est ajusté lorsque la période de commande en boucle fermée est plus longue qu'une longueur de temps prédéterminée.

4. Procédé selon la revendication 1, 2 ou 3, dans lequel le deuxième paramètre stocké est augmenté lorsque l'augmentation de la pression de commande d'arrivée au cours de la période de commande en circuit fermé est inférieure à la valeur prédéterminée.

5. Procédé selon l'une quelconque des revendications précédentes, dans lequel le deuxième paramètre stocké est ajusté lorsque la période de commande en boucle fermée est plus courte que la longueur prédéterminée de temps.

6. Procédé selon l'une quelconque des revendications précédentes, comprenant les stades consistant à détecter le patinement du dispositif de transmission de couple de départ et une synchronisation sensible du dispositif de transmission de couple d'arrivée, à mesurer le temps entre le patinement détecté et la synchronisation détectée et à inhiber le réglage du premier paramètre stocké lorsque la période mesurée est inférieure à une quantité prédéterminée.

7. Procédé selon l'une quelconque des revendications précédentes, comprenant les stades qui consistent à mesurer l'accélération de la turbine et à inhiber l'ajustement du premier paramètre stocké lorsque l'accélération est supérieure à une valeur prédéterminée.

8. Procédé selon l'une quelconque des revendications précédentes, dans lequel le stade d'ajustement du premier paramètre stocké consiste à ajuster le premier paramètre stocké d'une quantité relativement importante avant que ne se produise un changement non aberrant, et d'une quantité relativement faible après que se soit produit un changement non aberrant, dans lequel un changement non aberrant est déterminé par un changement dans lequel aucun ajustement du premier ou du deuxième paramètre n'est effectué.

9. Procédé selon l'une quelconque des revendications précédentes, comprenant les étapes qui consistent à mesurer la décélération de la turbine et à inhiber l'ajustement du premier et du deuxième paramètres stockés lorsque la décélération est supérieure à une valeur prédéterminée.

10. Procédé selon l'une quelconque des revendications précédentes, dans lequel le stade de détermination d'un état de sous-remplissage du dispositif de transmission de couple d'arrivée comprend les étapes qui consistent à détecter le défaut de patinement du dispositif de transmission de couple d'arrivée sur la base de la vitesse de la turbine et de la vitesse de sortie, dans lequel on détermine que le patinement s'est produit lorsque la vitesse de la turbine a augmentée au-dessus de la vitesse de la turbine à la vitesse de sortie correspondant au rapport de vitesse supérieur.

11. Procédé selon l'une quelconque des revendications précédentes, dans lequel le stade de détermination d'un état de sous-remplissage du dispositif de transmission de couple d'arrivée comprend l'étape qui consiste à détecter un écart après le temps de remplissage, l'écart étant déterminé s'être produit en raison d'une réduction de la vitesse de la turbine en dessous de la vitesse de la turbine correspondant à la vitesse de sortie pour le rapport de vitesse supérieur.

12. Procédé selon une quelconque des revendications précédentes, dans lequel le stade de détermination d'un état de sous-remplissage du dispositif de transmission de couple d'arrivée consiste à détecter l'apparition d'un vacillement après une période de temps prédéterminée après la fin de la période de remplissage.

13. Procédé selon la revendication 1, comprenant les stades consistant à détecter si la pression de commande d'arrivée se situe au-dessus d'une pression prédéterminée en détectant la présence d'aberrations de vitesse, à réduire la pression de la commande d'arrivée par détection des aberrations de vitesse en ajustant le deuxième paramètre stocké de manière à réduire la période de remplissage et, lors de changements ultérieurs lorsque la commande de pression d'arrivée est déterminée pour être en dessous de la pression requise, à ajuster le premier paramètre stocké si la période de remplissage a précédemment été réduite.

FIG. 1a

| RANGE | CLUTCHES APPLIED | | | | |
|---|---|---|---|---|---|
| | C1 | C2 | C3 | C4 | C5 |
| FWD 1 | X | | | | X |
| 2 | X | | | X | |
| 3 | X | | X | | |
| 4 | X | X | | | |
| 5 | | X | X | | |
| 6 | | X | | X | |
| REV 1 | | | X | | X |

FIG.1b

INITIALIZATION — 130

I/O — 132

DIAGNOSTICS — 134

SHIFT SCHEDULING — 136

SET ADAPTIVE FLAGS — 138

CLUTCH CONTROL LOGIC — 140

FIG.2

FIG. 3a

140 — SOLENOID CONTROL LOGIC

142 — LOCKUP CLUTCH CONTROL ← YES — 144 LOCKUP SHIFT IN PROGRESS ? — NO

146 RANGE SHIFT IN PROGRESS ? — NO → (A) ; YES

168 — AT CLOSED-THROTTLE ? — YES ; NO

169 — SET CLOSED-THROTTLE DOWNSHIFT IN PROGRESS FLAG → (B)

173 — IS CLOSED-THROTTLE DOWNSHIFT IN PROGRESS FLAG SET ? — YES → (C) ; NO → (D)

150 UPSHIFT ? — YES → 164 UPSHIFT ON-COMING CLUTCH CONTROL ; NO

152 DOWNSHIFT ? — YES ; NO → (E)

166 — UPSHIFT OFF-GOING CLUTCH CONTROL → (F)

EP 0 435 377 B1

16

EP 0 435 377 B1

FIG. 3b

A

B
170 — CLOSED-THROTTLE DOWNSHIFT ON-COMING CLUTCH CONTROL

172 — CLOSED THROTTLE DOWNSHIFT OFF-GOING CLUTCH CONTROL

C
178 — CLOSED THROTTLE TO POWERED DOWNSHIFT TRANSITION LOGIC

D
174 — POWERED DOWNSHIFT ON-COMING CLUTCH CONTROL

176 — POWERED DOWNSHIFT OFF-GOING CLUTCH CONTROL

E
154 — NEUTRAL SHIFT ?

YES → 155 — NEUTRAL SHIFT CLUTCH CONTROL

NO → 156 — GARAGE SHIFT CLUTCH CONTROL

F

160 — END OF SHIFT ?

YES → 162 — CHANGE ADAPTIVE SHIFT PARAMETERS

NO → 163 — OUTPUT DUTY CYCLE COMMAND

RETURN

FIG.4

FIG.5

FIG.6a

FIG.6b

FIG.7

FIG.8

22

FIG.9

FIG.10

FIG.11